# EUROPÄISCHE PATENTSCHRIFT

(11) **EP 3 548 550 B1**
(45) Veröffentlichungstag und Bekanntmachung des Hinweises auf die Patenterteilung: **03.09.2025**
(21) Anmeldenummer: 17801021.1
(22) Anmeldetag: 02.11.2017
(51) Int. Cl.: C08K 3/04, C08K 3/06, C08K 3/36, C08K 5/14, C08K 5/3465, F16L 11/04

(54) **KAUTSCHUKMISCHUNG, INSBESONDERE FÜR EINEN SCHLAUCH**
RUBBER MIXTURE, IN PARTICULAR FOR A HOSE
MÉLANGE DE CAOUTCHOUC, EN PARTICULIER POUR UN TUYAU

(30) Priorität: 29.11.2016 DE 102016223621
(43) Veröffentlichungstag der Anmeldung: 09.10.2019
(73) Patentinhaber: ContiTech Deutschland GmbH, 30175 Hannover (DE)
(72) Erfinder: ONKEN, Kristian, 34131 Kassel (DE)
(74) Vertreter: Preusser, Andrea
(86) Internationale Anmeldenummer: PCT/EP2017/077990
(87) Internationale Veröffentlichungsnummer: WO 2018/099679

(56) Entgegenhaltungen:
- EP-A1- 2 239 297
- US-A1- 2012 199 238
- DATABASE WPI Week 201362, Derwent World Patents Index; AN 2013-N07723, XP002777368
- DATABASE WPI Week 201370, Derwent World Patents Index; AN 2013-P94357, XP002777369

## Beschreibung

Die Erfindung betrifft eine Kautschukmischung, insbesondere für einen Schlauch, mit verbesserter Haftung, insbesondere zu Fluorpolymeren.

Für die Produktion von flexiblen, permeationsarmen, temperaturstabilen sowie chemikalien- und kraftstoffbeständigen Gegenständen, wie z.B. Schläuchen, werden häufig Fluorpolymere bzw. Kautschukmischungen auf Basis von Fluorpolymeren verwendet. Dabei kann das Fluorpolymer ein Fluorkunststoff oder ein Fluorelastomer sein, welches mit einem nicht fluoriertem Elastomer verbunden wird.

Das Fluorpolymer bzw. die Fluorpolymermischung besticht dabei durch seine Chemikalien- und Temperatubeständigkeit sowie seiner guten Barrierewirkung, die dahinterliegende Elastomermischung sorgt für die entsprechende Flexibilität. In der Regel ist die Fluorpolymerschicht gegenüber der Elastomerschicht dünner.

Je nach Verwendungszweck und Art des Gegenstandes kann auch eine zusätzliche Elastomerschicht vor die Fluorpolymerschicht aufgebracht werden, so dass die Fluorkunststoffschicht zwischen den Elastomerschichten eingebettet ist. Häufig wird dieser Aufbau gewählt, wenn die Fluorpolymerschicht als Barriereschicht (Sperrschicht) wirken soll. Zusätzlich kann die Schlauchkonstruktion durch eine oder mehrere Verstärkungsschicht(en), d.h. Festigkeitsträgerschicht z.B. aus Stahlgeflecht oder synthetischem Garn oder Gewebe, und einem weiteren Außengummi als Schutzschicht aufgebaut sein.

Nachteilig an diesem Aufbau ist, dass Fluorpolymere in der Regel keine oder wenn überhaupt nur geringe Haftung zu einer nicht fluorierten Elastomermischung aufweisen. Dieses ist auf die anti-adhäsive Eigenschaften der Fluorpolymere, dem so genannten Teflon-Effekt, zurückzuführen. Daher muss entweder die Fluorpolymeroberfläche mit physikalischen Mitteln, z.B. durch Plasmaätzung, siehe DE69930696A1, oder mit chemischen Mitteln, z.B. durch Natrium-Ammoniak- oder Natrium-Naphthalin-Ätzung, siehe DE102008014988A1, vorbehandelt werden. Diese Methoden sind aufwendig, kostenintensiv und meist unpraktikabel, jedoch bei hoch- bzw. vollfluorierten Polymeren, wie z.B. PTFE, FEP, PFA, MFA, unvermeidlich.

Bei teilfluorierten Fluorpolymeren wie z.B. PVF, PVDF, THV, ETFE, ECTFE, aber auch bestimmten Fluorelastomeren wie FKM, ist es jedoch möglich, durch Zugabe von bestimmten haftvermittelnden Chemikalien, im weiteren "Haftvermittler" genannt, in die Elastomermischung, eine ausreichende Haftung zwischen Fluorpolymer und Elastomer zu erreichen.

Als Haftvermittler wurden einige Verbindungen beschrieben, u.a. primäre Amine, siehe DE69506904T2, aminosubstituierte Organosilanverbindungen, siehe DE60211160T2, und Cyanacrylat/Epoxid-Verbindungen, siehe US5679425. Nachteilig an diesen Verbindungen ist, dass sie teilweise nicht kompatibel mit jedem Elastomer sind, nicht sehr einfach handhabbar sind, toxikologisch nicht ganz unbedenklich sind und teilweise auch nur mittelmäßige Haftwerte zwischen Fluorpolymer und Elastomer aufweisen.

Zudem ist bekannt, dass zur Haftungsoptimierung das Fluorpolymer oberflächlich modifiziert bzw. gepropft sein kann, siehe EP1537989B1 oder US6143415. Nachteilig daran ist, dass die Fluorpolymere durch den zusätzlichen Herstellprozeß teurer werden, ihre physikalischen Eigenschaften verändert werden und sie möglicherweise bestimmte Zulassungen im Lebensmittel- oder Trinkwasserbereich verlieren.

Auch beschrieben ist die zusätzliche Einfügung einer gering fluorierten Fluorpolymerschicht mit niedrigerem Schmelzpunkt zwischen Fluorpolymer und Elastomer, welche die Lagenhaftung verbessern soll, siehe EP1497112B2. Nachteilig an dieser Methode ist, dass eine zusätzliche Schicht eingefügt werden muss, wass die Herstellung erschwert, die Kosten erhöht und der Flexibilität entgegenwirkt.

Es wurde daher zunächst nach einem möglichst ungiftigen, kostengünstigen, leicht verarbeitbaren Haftvermittler gesucht, der sich direkt in eine vernetzbare Kautschukmischung einarbeiten lässt und der nach der Vulkanisation eine ideale Haftung zwischen einem Fluorpolymer und einer Elastomermischung ergibt, d.h. eine nur unter Riss einer Komponente trennbare Verbindung, die nicht delaminierbar ist.

In DE10322026A1 werden hierzu Phosphoniumsalze wie z.B. Tetrabutylphosphoniumbenzotriazolat beschrieben. Aber auch die Verwendung von Allyltributylphosphoniumchlorid ist möglich. Die Salze bewirken eine gute Haftung zwischen Elastomer und den meisten Fluorpolymeren, d.h. sie sind nur mit hoher Kraft delaminierbar, jedoch sinkt die Haftkraft insbesondere bei höherfluorierten Fluorpolymeren deutlich und eine Delaminierung, insbesondere unter Wärmeeinwirkung, ist möglich. In DE19980666T1 wird eine Haftungsoptimierung durch Zugabe von SbO₃ zum Phosphoniumsalz beschrieben. Nachteilig daran ist, dass SbO₃ toxikologisch kritisch anzusehen ist und auch aus Umweltgründen nicht mehr in Elastomermischungen verwendet werden sollte.

Eine andere Gruppe von effektiven Haftvermittlern sind bizyklische Amidine wie 1,8-Diazabicyclo[5.4.0]undec-7-en (DBU) und 1,5-Diazabicyclo[4.3.0]non-5-en (DBN) sowie deren Salze. DBU und DBN sind stark basische Flüssigkeiten, welche bei der Kautschukverarbeitung nicht einfach zu handhaben sind. Daher werden die entsprechenden Salze der Verbindung bevorzugt.

Die Haftung zu einem Fluor-Chlor-Polymer (CPT) mittels DBU-Salz oder DBN-Salz oder einer Mischung der beiden wird in US20120199238 beschrieben. Als geeignete DBU-Salze und DBN-Salze werden darin genannt: DBU-Naphthoat oder DBU-Sorbat oder DBU-Phenol-Harz, DBN-Naphthoat oder DBN-Sorbat oder DBN-Phenol-Harz. Das im CPT enthaltende Chlor spaltet sich bei der Reaktion leichter ab als der Fluor, wodurch eine schnellere und ggf. bessere Haftung erzielt werden kann.

In US20060127619A1 und DE602005005270T2 wird beschrieben, dass bei einem Fluorpolymer mit hohem Fluoranteil nur die Kombination eines Phosphoniumsalzes mit einem DBU-Salz oder DBN-Salz eine ideale Haftung ergibt. Die alleinige Verwendung des Phosphoniumsalzes zeigt keine ausreichende Haftung.

Nachteilig daran ist somit, dass insbesondere bei höherfluorierten Polymeren häufig zwei oder mehr Haftvermittler in die Kautschukmischung eingemischt werden müssen, um eine ausreichende Haftung zu erzielen.

Die Aufgabe der vorliegenden Erfindung ist es daher, eine Kautschukmischung bereitzustellen, die sich durch eine gute Haftung insbesondere zu höherfluorierten Fluorpolymeren auszeichnet, die neben Fluor keine weiteren Halogene enthalten. Der Aufwand bei der Herstellung der Kautschukmischung und eines Artikels, der die Kautschukmischung enthält, soll nicht erhöht werden. Die Kautschukmischung soll keine oder nur eine geringe Toxizität aufweisen, so dass sie auch für den Lebensmittel- und Trinkwasserbereich eingesetzt werden kann.

Als höherfluoriert werden gemäß der vorliegenden Erfindung Fluorpolymere bezeichnet, bei denen mehr als 50% der Atome an der Polymerkette, sowohl Haupt- als auch Nebenkette, Fluoratome sind.

Als niedrigfluoriert werden gemäß der vorliegenden Erfindung Fluorpolymere bezeichnet, bei denen weniger als 50% der Atome an der Polymerkette, sowohl Haupt- als auch Nebenkette, Fluoratome sind.

Gelöst wird diese Aufgabe dadurch, dass die Kautschukmischung aus folgenden Bestandteilen besteht:
- wenigstens einen Kautschuk
   und
- wenigstens einen Füllstoff , ausgewählt aus der Gruppe bestehend aus Ruß, Graphit, Kohlenstoffnanoröhren (CNT), Kieselsäure, Calcium- und Aluminiumsilikate, Kieselgur, Kaolin, Kalkstein, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Kern/Mantel-Füllstoffe, Asphalt, Hartgummistaub, Glaskugeln, Holzmehl, Nussschalenmehl, die jeweils alleine oder in Kombination verwendet werden können und wobei die Gesamtmenge an Füllstoff nicht etwaige Reste des Trägers des DBU-Salzes beinhaltet
   und
- ein Haftvermittlersystem, welches aus wenigstens einem 1,8-Diaza-bicyclo[5.4.0]undec-7-en -Salz (DBU-Salz) besteht, wobei das DBU-Salz aus DBU und einer Monocarbonsäure und / oder einer dibasischen Säure erhalten wurde und wobei das DBU-Salz auf einen Träger aufgebracht wurde, wobei es sich bei dem Träger um Kieselsäure handelt
   und
- ein Vernetzungssystem enthaltend wenigstens einen Schwefel und / oder wenigstens einen Schwefelspender oder ein Vernetzungssystem enthaltend wenigstens ein Peroxid
   und
- 0 bis 300 phr weitere Zusatzstoffe, ausgewählt aus der Gruppe bestehend aus Zinkoxid, Zinkstearat, Mg-Stearat, Stearinsäure, und Weichmacher, wie z.B. Weißöle, Ester, Faktis und Wachse, und Emulgatoren und Dispersionsmittel und Neutralisierungsmittel und Alterungsschutzmittel und organische Pigmente und anorganische Pigmente und Ozonschutzmittel und Flammschutzmittel und antibakterielle Zusätze, Geruchsneutralisationsmittel, Aromen, und Gleit- und Formtrennmittel und Schutzmittel gegen Fäulnis
   und
wobei die Gesamtmenge des Haftvermittlersystems 0,005 bis 50 M% jeweils pro 100g Kautschukmischung beträgt.

Überraschenderweise hat sich gezeigt, dass ein derartiges Haftvermittlersystem in Kombination mit den beschriebenen Vernetzungssystemen sich gut in alle gängigen Kautschuke einarbeiten lässt und alleine, d.h. ohne Zugabe eines weiteren Haftvermittlers, bei vergleichsweise geringer Konzentration nach der Vulkanisation eine ideale Haftung auch zu höherfluorierten Polymeren erzeugt. Gleichzeitig ist eine derartige Kautschukmischung in Produkten mit Lebensmittel- oder Trinkwasserkontakt verwendbar.

Bei dem DBU-Salz und dem DBN-Salz, welche erfindungsgemäß alleine oder in Kombination eingesetzt werden können, handelt es sich jeweils um eine Verbindung aus DBU bzw DBN und einer Monocarbonsäure oder einer dibasischen Säure. Monocarbonsäuren sind Säuren, die über eine Carboxylgruppe verfügen.

Bei der Monocarbonsäure kann es sich um eine acyclische aliphatische Monocarbonsäure oder um eine cyclische aliphatische Monocarbonsäure oder um eine aromatische Monocarbonsäure oder um eine heterocyclische Monocarbonsäure handeln. Sie können jeweils gesättigt oder ungesättigt sein.

Beispiele für gesättigte cyclische Monocarbonsäuren sind Cyclobutansäure oder Cyclohexancarbonsäure.

Bevorzugt handelt es sich allerdings um eine gesättigte acyclische Monocarbonsäure mit der Formel H(CH)ₘCOOH, wobei m hierbei Werte zwischen 0 und 40, bevorzugt zwischen 8 und 25, annehmen kann. Beispiele für solche gesättigten aliphatische Monocarbonsäuren sind Ameisensäure (m=0), Essigsäure (m=1), Propionsäure (m=2), Buttersäure (m=3), Valeriansäure (m=4), Capronsäure (m=5), Önanthsäure (m=6), Caprylsäure (m=7), Pelargonsäure (m=8), Caprinsäure (m=9), Undecansäure (m=10), Laurinsäure (m=11), Tridecansäure (m=12), Myristinsäure (m=13), Pentadecandisäure (m=14), Palmitinsäure (m=15), Margarinsäure (m=16), Stearinsäure (m=17), Nonadecansäure (m=18), Arachinsäure (m=19), Heneicosansäure (m=20), Behensäure (m=21), Lignocerinsäure (m=22), etc.

Dibasische Säuren sind Carbonsäuren, die über zwei Carboxylgruppen verfügen. Bei der dibasischen Säure kann es sich um eine acyclische aliphatische dibasische Säure oder um eine cyclische aliphatische dibasische Säure oder um eine aromatische dibasische Säure oder um eine heterocyclische dibasische Säure handeln. Sie können jeweils gesättigt oder ungesättigt sein. Als aromatische dibasische Säuren können bspw. Phthalsäure, Terephthalsäure oder Isophthalsäure verwendet werden.

Bevorzugt handelt es sich allerdings um eine aliphatische dibasische Säure mit der Formel HOOC(CH)ₘCOOH, wobei m hierbei Werte zwischen 0 und 40, bevorzugt zwischen 6 und 22, besonders bevorzugt zwischen 6 und 12, annehmen kann. Beispiele für solche aliphatischen dibasische Säuren sind Oxalsäure (m=0), Malonsäure (m=1), Bernsteinsäure (m=2), Glutarsäure (m=3), Adipinsäure (m=4), Pimelinsäure (m=5), Suberinsäure (m=6), Azelainsäure (m=7), Sebacinsäure (m=8), Undecandisäure (m=9), Dodecandisäure (m=10), Brassylsäure (m=11), Tetradecandisäure (m=12), Thapsiasäure (m=14), Heptadecandisäure (m=15), Octadecandisäure (m=16), Nonadecandisäure (m=17) und Eicosandisäure (m=18).

Wie bereits erwähnt, besteht das Haftvermittlersystem aus wenigstens einem 1,8-Diaza-bicyclo[5.4.0]undec-7-en -Salz (DBU-Salz) besteht, wobei das DBU-Salz aus DBU und einer Monocarbonsäure und / oder einer dibasischen Säure erhalten wurde und wobei das DBU-Salz auf einen Träger aufgebracht wurde, wobei es sich bei dem Träger um Kieselsäure handelt. Besonders gute Haftergebnisse lassen sich erzielen, wenn ein Gemisch aus verschiedenen DBU-Salzen eingesetzt wird. Bevorzugt handelt es sich hierbei um ein Gemisch aus verschiedenen DBU-Salzen, die aus DBU und jeweils verschiedenen aliphatischen dibasischen Säuren, jeweils auf einem Träger erhalten wurde. Als dibasische Säuren für das Gemisch sind hierzu besonders Adipinsäure (m=4), Pimelinsäure (m=5), Suberinsäure (m=6), Azelainsäure (m=7), Sebacinsäure (m=8), Undecandisäure (m=9) und Dodecandisäure (m=10) in verschiedenen Kombinationen oder in einer Kombination, in der m=4, m=5, m=6, m=7, m=8, m=9 und m=10 enthalten sind, gut geeignet.

Die Gesamtmenge an Haftvermittlersystem in der Kautschukmischung beträgt zwischen 0,005 und 50 M%, bevorzugt zwischen 0,025 und 40 M% und besonders bevorzugt zwischen 0,25 und 10 M%.

Der Begriff "M%" bezieht sich hierbei auf eine Mengenangabe jeweils pro 100g Kautschukmischung.

Der ebenso verwendete Begriff "K%" bezieht sich auf eine Mengenangabe jeweils pro 100g Kautschuk und ist somit der Angabe "phr" (parts per hundred parts of rubber) gleichzusetzen.

Der Kautschuk ist bevorzugt ausgewählt aus der Gruppe bestehend aus Ethylen-Propylen-Mischpolymerisat (EPM) und Ethylen-Propylen-Dien-Mischpolymerisat (EPDM) und / oder Nitrilkautschuk (NBR) und (teil)hydrierter Nitrilkautschuk (HNBR) und Polyblend aus Nitrilkautschuk mit Polyvinylchlorid (NBR/PVC) und Fluor-Kautschuk (FKM) und Chloropren-Kautschuk (CR) und Naturkautschuk (NR) und Styrol-Butadien-Kautschuk (SBR) und lösungspolymerisiertem Styrol-Butadien-Kautschuk (SSBR) und emulsionspolymerisiertem Styrol-Butadien-Kautschuk (ESBR) und Isopren-Kautschuk (IR) und Butylkautschuk (IIR) und Brombutylkautschuk (BIIR) und Chlorbutylkautschuk (CIIR) und Butadien-Kautschuk (BR) und Chloriertes Polyethylen (CM) und Chlorsulfoniertes Polyethylen (CSM) und Epichlorhydrinkautschuk (ECO, CO, ETER) und Ethylen-Vinylacetat-Kautschuk (EVA) und Silikonkautschuk (MQ, VMQ, PVMQ, FVMQ) und fluorierter Methylsilikonkautschuk (MFQ) und perfluorinierter Propylen-Kautschuk (FFPM) und Perfluorcarbon-Kautschuk (FFKM) und Poyurethan (PU) und Polynorbenkautschuk (PNR) und Trans-Polyoctenamer-Kautschuk (TOR) und Polyester-Urethan-Kautschuk (AU) und Polyurethan-Kautschuk (EU).

Die genannten Kautschuke können hierbei alleine oder in Kombination eingesetzt werden. Besonders gut geeignet sind NBR, NBR/PVC, HNBR, EPDM, ECO, CM, CR, CSM, CHR.

Weiterhin enthält die Kautschukmischung noch wenigstens einen Füllstoffausgewählt aus der Gruppe bestehend aus Ruß, Graphit, Kohlenstoffnanoröhren (CNT), Kieselsäure, Calcium- und Aluminiumsilikate, Kieselgur, Kaolin, Kalkstein, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Kern/Mantel-Füllstoffe, Asphalt, Hartgummistaub, Glaskugeln, Holzmehl, Nussschalenmehl, die jeweils alleine oder in Kombination verwendet werden können und wobei die Gesamtmenge an Füllstoff nicht etwaige Reste des Trägers des DBU-Salzes beinhaltet.

Damit die Kautschukmischung eine gute elektrische Leitfähigkeit aufweist, hat sich besonders die Verwendung von leitfähigen Rußen, Graphit, CNT und Metallen und deren Verbindungen, insbesondere Eisenverbindungen, als bevorzugt erwiesen.

Die Gesamtmenge an Füllstoff beträgt bevorzugt 10 bis 300 phr, besonders bevorzugt 20 bis 100 phr. Die Gesamtmenge an Füllstoff beinhaltet nicht etwaige Reste des Trägers. Besonders gut geeignet sind basische Füllstoffe, da diese bei der Abstraktion des Fluoratoms von der Polymerkette hilfreich sind. Zusäzlich ist es hilfreich, wenn der Füllstoff noch eine verstärkende Wirkung hat. Daher sind Kaolin und Kreide , insbesondere aber Ruß und Kieselsäure besonders bevorzugt.

Des Weiteren enthält die erfindungsgemäße Kautschukmischung ein Vernetzungssystem enthaltend wenigstens einen Schwefel und / oder wenigstens einen Schwefelspender oder ein Vernetzungssystem enthaltend wenigstens ein Peroxid.

Die Wahl des Vernetzungssystems hängt hierbei im Wesentlichen von den eingesetzten Kautschuken ab.

Besonders bevorzugt ist ein Vernetzungssystem enthaltend wenigstens ein Peroxid oder ein Vernetzungssystem enthaltend wenigstens einen Schwefelspender, bspw. eine Thiuramverbindung.

Ein peroxidisches Vernetzungssystem erzeugt -O*-Radikale, welche besonders reaktiv sind und ggf. die Fluorabstraktion und die Ausbildung einer stabilen Atombindung unterstützen können. Zudem sind peroxidisch vernetzte Kautschuke besonders temperaturstabil.

Ein Vernetzungssystem mit Schwefelspender ergibt dynamisch flexiblere Endprodukte. Bei einer Harzvernetzung muss die Menge an DBU zu Harz und der pH-Wert gut abgestimmt werden. Vorteil der Harzvernetzung ist, dass kein Spaltprodukt (somit wenig Geruch) entsteht und dass das Harz vollständig zwischen die Polymerkette eingebaut wird.

Erfindungsgemäß enthält die Kautschukmischung noch 0 bis 300 phr weitere Zusatzstoffe, ausgewählt aus der Gruppe bestehend aus Zinkoxid, Zinkstearat, Mg-Stearat, Stearinsäure, und Weichmacher, wie z.B. Weißöle, Ester, Faktis und Wachse, und Emulgatoren und Dispersionsmittel und Neutralisierungsmittel und Alterungsschutzmittel und organische Pigmente und anorganische Pigmente und Ozonschutzmittel und Flammschutzmittel und antibakterielle Zusätze, Geruchsneutralisationsmittel, Aromen, und Gleit- und Formtrennmittel und Schutzmittel gegen Fäulnis und Reste der Monocarbonsäure und Reste der dibasischen Säure und Reste des Trägers.

Die Kautschukmischung kann somit in einer besonders bevorzugten Ausführungsform frei von weiteren Zusatzstoffen sein, wenn die Menge an weiteren Zusatzstoffen 0 phr beträgt. Die Menge an Zusatzstoffen kann in einer weiteren bevorzugten Ausführungsform 0,1 bis 300 phr, 1 bis 300 phr oder 3 bis 300 phr betragen.

Die genannten Zusatzstoffe können jeweils alleine oder in Kombination vorhanden sein.

Die erfindungsgemäße Kautschukmischung wird bevorzugt in technischen Kautschukartikeln, wie bspw. Luftfedern, Gummi-Feder-Elemente, Antriebsriemen, Transportbänder, Fördergurte, Schläuche, Reifen, Dichtungsmaterialien, mehrschichtige Stoffbahnen zur Bildung von flexiblen Behältern, Zelten, Planen, Membranen, Schutzanzügen, Drucktüchern oder Faltenbälgen eingesetzt.

Bevorzugt für die Kautschukmischung in Schläuchen, wie bspw. Zapfschläuche, Krümmerschläuche, Kraftstoffschläuche, Offshore- und Marineschläuche, Bunkerschläuche, Klimaschläuche und Farbspritzschläuche, beheizbare Schläuche, permeationsarme Schläuche, eingesetzt.

Aufgrund der geringen Toxizität der Kautschukmischung, die eine Anwendung im Lebensmittel- und Trinkwasserbereich ermöglicht, wird die Kautschukmischung bevorzugt in Trinkwasserschläuchen und Lebensmittelschläuchen verwendet.

Die Erfindung soll nun anhand von Vergleichs- und Ausführungsbeispielen, die den verschiedenen Tabellen zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Die Bewertung der Haftung zu Fluorkautschuk erfolgt mittels subjektivem Labortest, bei dem händisch versucht wird, beide Schichten voneinander zu trennen. Es bedeuten daher:
XX = ideale Haftung (nur unter Materialriss trennbar)
X = gute Haftung (delaminierbar unter mittlerer Kraft)
0 = schlechte bzw. keine Haftung (leicht delaminierbar mit wenig / ohne Kraft)

**Tabelle 1**

| | **Haftvermittler** | **Menge Haftvermittler phr** | **Kautschuk** | **Füllstoffe** | **Peroxid** | **Schwefel** | **Haftung zu Fluorpolymer** |
|---|---|---|---|---|---|---|---|
| **E1** | DBU-Salze auf Kieselsäure-Träger (Gemisch; m=4 bis 10) | 3 | NBR | Ruß | ja | nein | XX (THV 415) |
| | | | | | | | XX (THV 500) |
| **E2** | DBU-Salze auf Kieselsäure-Träger (Gemisch; m=4 bis 10) | 1 | NBR | Ruß | nein | ia | XX |
| **V1** | DBU-Stearat | 3 | NBR | Ruß | ja | nein | X |
| **V2** | DAU-Phenol-Salz | 3 | NBR | Ruß | ja | nein | X (THV 415) |
| | | | | | | | 0 (THV 500) |
| **V3** | Phosphonium-Salz | 4 | NBR | Ruß | ja | nein | XX |
| **V4** | Phosphonium-Salz | 1,1 | NBR | Ruß | ja | nein | 0 |
| **V5** | Phosphonium-Salz | 3 | NBR | Ruß | ja | nein | 0 |
| **V6** | Phosphonium-Salz | 3 | NBR | Ruß | nein | ja | 0 |

**Tabelle 2**

| | **Haftvermittler** | **Menge Haftvermittler [phr]** | **Kautschuk** | **Füllstoffe** | **Peroxid** | **Schwefel** | **Haftung zu Fluorpolymer "THV500"** |
|---|---|---|---|---|---|---|---|
| E3 | DBU-Salze auf Kieselsäure-Träger (Gemisch; m=4 bis 10) | 3 | NBR | Ruß | ja | nein | XX |
| E4 | DBU-Salze auf Kieselsäure-Träger (Gemisch; m=4 bis 10) | 2 | NBR | Ruß | ja | nein | XX |
| E5 | DBU-Salze auf Kieselsäure-Träger (Gemisch; m=4 bis 10) | 1,5 | NBR | Ruß | ja | nein | XX |
| E6 | DBU-Salze auf Kieselsäure-Träger (Gemisch; m=4 bis 10) | 1 | NBR | Ruß | ja | nein | XX |
| E7 | DBU-Salze auf Kieselsäure-Träger (Gemisch; m=4 bis 10) | 0,5 | NBR | Ruß | ja | nein | XX |
| E8 | DBU-Salze auf Kieselsäure-Träger (Gemisch; m=4 bis 10) | 0,3 | NBR | Ruß | ja | nein | X |
| E9 | DBU-Salze auf Kieselsäure-Träger (Gemisch; m=4 bis 10) | 0,2 | NBR | Ruß | ja | nein | 0 |
| E10 | DBU-Salze auf Kieselsäure-Träger (Gemisch; m=4 bis 10) | 0,1 | NBR | Ruß | ja | nein | 0 |
| E11 | DBU-Salze auf Kieselsäure-Träger (Gemisch; m=4 bis 10) | 0,2 | NBR | Ruß | ja | nein | 0 |
| E12 | DBU-Salze auf Kieselsäure-Träger (Gemisch; m=4 bis 10) | 0,1 | NBR | Ruß | ja | nein | 0 |

**Tabelle 3**

| | **Haftvermittler** | **Menge Haftvermittler [phr]** | **Kautschuk** | **Füllstoffe** | **Peroxid** | **Schwefel** | **Haftung zu Fluorpolymer** |
|---|---|---|---|---|---|---|---|
| E13 | DBU-Salze auf Kieselsäure-Träger (Gemisch; m=4 bis 10) | 1 | NBR (39ACN) | Ruß | ja | nein | XX |
| E14 | DBU-Salze auf Kieselsäure-Träger (Gemisch; m=4 bis 10) | 1 | NBR (39ACN) | Ruß | nein | ja | XX |
| E15 | DBU-Salze auf Kieselsäure-Träger (Gemisch; m=4 bis 10) | 1 | NBR (34ACN) | Ruß | ja | nein | XX |
| E16 | DBU-Salze auf Kieselsäure-Träger (Gemisch; m=4 bis 10) | 1 | NBR/PVC (28ACN) | Ruß | ja | nein | XX |
| E17 | DBU-Salze auf Kieselsäure-Träger (Gemisch; m=4 bis 10) | 0,8 | NBR (28ACN) | Ruß | ja | nein | XX |
| E18 | DBU-Salze auf Kieselsäure-Träger (Gemisch; m=4 bis 10) | 0,8 | NBR (34ACN) | Kieselsäure | ja | nein | XX (THV 500) XX |
| | | | | | | | (THV610) XX |
| | | | | | | | (THV 815) |
| E19 | DBU-Salze auf Kieselsäure-Träger (Gemisch; m=4 bis 10) | 2,3 | EPDM | Kieselsäure | ja | nein | XX (THV 500) X |
| | | | | | | | (THV610) |
| | | | | | | | 0 (THV 815) |
| E20 | DBU-Salze auf Kieselsäure-Träger (Gemisch; m=4 bis 10) | 0,9 | EPDM | Ruß | ja | nein | XX |
| E21 | DBU-Salze auf Kieselsäure-Träger (Gemisch; m=4 bis 10) | 2,5 | EPDM | Kieselsäure | nein | ja | 0 (THV 500) |
| | | | | | | | 0 (THV610) |
| | | | | | | | 0 (THV 815) |
| E22 | DBU-Salze auf Kieselsäure-Träger (Gemisch; m=4 bis 10) | 0,8 | EPDM | Ruß | nein | ja | 0 |

## Patentansprüche

1. Kautschukmischung, **dadurch gekennzeichnet, dass** sie aus folgenden Bestandteilen besteht:
- wenigstens einen Kautschuk
und
- wenigstens einen Füllstoff , ausgewählt aus der Gruppe bestehend aus Ruß, Graphit, Kohlenstoffnanoröhren (CNT), Kieselsäure, Calcium- und Aluminiumsilikate, Kieselgur, Kaolin, Kalkstein, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Kern/Mantel-Füllstoffe, Asphalt, Hartgummistaub, Glaskugeln, Holzmehl, Nussschalenmehl, die jeweils alleine oder in Kombination verwendet werden können und wobei die Gesamtmenge an Füllstoff nicht etwaige Reste des Trägers des DBU-Salzes beinhaltet
und
- ein Haftvermittlersystem, welches aus wenigstens einem 1,8-Diaza-bicyclo[5.4.0]undec-7-en -Salz (DBU-Salz) besteht, wobei das DBU-Salz aus DBU und einer Monocarbonsäure und / oder einer dibasischen Säure erhalten wurde und wobei das DBU-Salz auf einen Träger aufgebracht wurde, wobei es sich bei dem Träger um Kieselsäure handelt
und
- ein Vernetzungssystem enthaltend wenigstens einen Schwefel und / oder wenigstens einen Schwefelspender oder ein Vernetzungssystem enthaltend wenigstens ein Peroxid
und
- 0 bis 300 phr weitere Zusatzstoffe, ausgewählt aus der Gruppe bestehend aus Zinkoxid, Zinkstearat, Mg-Stearat, Stearinsäure, und Weichmacher, wie z.B. Weißöle, Ester, Faktis und Wachse, und Emulgatoren und Dispersionsmittel und Neutralisierungsmittel und Alterungsschutzmittel und organische Pigmente und anorganische Pigmente und Ozonschutzmittel und Flammschutzmittel und antibakterielle Zusätze, Geruchsneutralisationsmittel, Aromen, und Gleit- und Formtrennmittel und Schutzmittel gegen Fäulnis
und
wobei die Gesamtmenge des Haftvermittlersystems 0,005 bis 50 M% jeweils pro 100g Kautschukmischung beträgt.

2. Kautschukmischung nach Anspruch 1, **dadurch gekennzeichnet, dass** der Kautschuk ausgewählt ist aus der Gruppe bestehend aus Ethylen-Propylen-Mischpolymerisat (EPM) und Ethylen-Propylen-Dien-Mischpolymerisat (EPDM) und Nitrilkautschuk (NBR) und (teil)hydrierter Nitrilkautschuk (HNBR) und Polyblend aus Nitrilkautschuk mit Polyvinylchlorid (NBR/PVC) und Fluor-Kautschuk (FKM) und Chloropren-Kautschuk (CR) und Naturkautschuk (NR, IR) und Styrol-Butadien-Kautschuk (SBR) und lösungspolymerisiertem Styrol-Butadien-Kautschuk (SSBR) und emulsionspolymerisiertem Styrol-Butadien-Kautschuk (ESBR) und Isopren-Kautschuk (IR) und Butylkautschuk (IIR) und Brombutylkautschuk (BIIR) und Chlorbutylkautschuk (CIIR) und Butadien-Kautschuk (BR) und Chloriertes Polyethylen (CM) und Chlorsulfoniertes Polyethylen (CSM) und Epichlorhydrinkautschuk (ECO, CO, ETER) und Ethylen-Vinylacetat-Kautschuk (EVA) und Silikonkautschuk (MQ, VMQ, PVMQ, FVMQ) und fluorierter Methylsilikonkautschuk (MFQ) und und Fluorkautschuk (FKM) und perfluorinierter Propylen-Kautschuk (FFPM) und Perfluorcarbon-Kautschuk (FFKM) und Polyurethan (PU) und Polynorbenkautschuk (PNR) und Trans-Polyoctenamer-Kautschuk (TOR) und Polyester-Urethan-Kautschuk (AU) und Polyurethan-Kautschuk (EU).

3. Kautschukmischung nach Anspruch 1 oder 2, **dadurch gekennzeichnet, dass** der Füllstoff Kieselsäure und / oder Ruß ist.

4. Kautschukmischung nach einem der Ansprüche 1 bis 3, **dadurch gekennzeichnet, dass** die Gesamtmenge an Füllstoff 10 bis 300 phr beträgt.

5. Verwendung einer Kautschukmischung nach einem der Ansprüche 1 bis 4 in Schläuchen.

## Claims

1. Rubber mixture, **characterized in that** it is composed of the following constituents:
- at least one rubber
and
- at least one filler selected from the group consisting of carbon black, graphite, carbon nanotubes (CNT), silica, calcium and aluminium silicates, kieselguhr, kaolin, limestone, feldspar and/or talc chalk, alumina gel, fibres (short and long fibres, glass, carbon, aramid fibres), whiskers (aluminium oxide, silicon carbide), mica, magnetite, core/shell fillers, asphalt, hard rubber dust, glass spheres, wood flour, nut shell flour which may each be used alone or in combination and wherein the total amount of filler does not include any residues of the carrier of the DBU salt
and
- an adhesion promoter system consisting of at least one 1,8-diaza-bicyclo[5.4.0]undec-7-ene salt (DBU salt), wherein the DBU salt was obtained from DBU and a monocarboxylic acid and/or a dibasic acid and wherein the DBU salt was applied to a carrier, wherein the carrier is silica
and
- a crosslinking system containing at least one sulfur and/or at least one sulfur donor or a crosslinking system containing at least one peroxide
and
- 0 to 300 phr of further additives selected from the group consisting of zinc oxide, zinc stearate, Mg stearate, stearic acid, and plasticizers, for example white mineral oils, esters, factice and waxes, and emulsifiers and dispersants and neutralizing agents and ageing stabilizers and organic pigments and inorganic pigments and antiozonants
and flame retardants and antibacterial additives, odour neutralizers, aromas, and lubricants and mould release agents and anti-putrefaction agents
and
wherein the total amount of the adhesion promoter system is 0.005 to 50 M% per 100g of rubber mixture in each case.

2. Rubber mixture according to Claim 1, **characterized in that** the rubber is selected from the group consisting of ethylene-propylene copolymer (EPM) and ethylene-propylene-diene copolymer (EPDM) and nitrile rubber (NBR) and (partially) hydrogenated nitrile rubber (HNBR) and polyblend of nitrile rubber with polyvinyl chloride (NBR/PVC) and fluororubber (FKM) and chloroprene rubber (CR) and natural rubber (NR, IR) and styrene-butadiene rubber (SBR) and solution-polymerized styrene-butadiene rubber (SSBR) and emulsion-polymerized styrene-butadiene rubber (ESBR) and isoprene rubber (IR) and butyl rubber (HR) and bromobutyl rubber (BIIR) and chlorobutyl rubber (CIIR) and butadiene rubber (BR) and chlorinated polyethylene (CM) and chlorosulfonated polyethylene (CSM) and epichlorohydrin rubber (ECO, CO, ETER) and ethylene-vinyl acetate rubber (EVA) and silicone rubber (MQ, VMQ, PVMQ, FVMQ) and fluorinated methylsilicone rubber (MFQ) and fluororubber (FKM) and perfluorinated propylene rubber (FFPM) and perfluorocarbon rubber (FFKM) and polyurethane (PU) and polynorbornene rubber (PNR) and trans-polyoctenamer rubber (TOR) and polyester-urethane rubber (AU) and polyurethane rubber (EU).

3. Rubber mixture according to Claim 1 or 2, **characterized in that** the filler is silica and/or carbon black.

4. Rubber mixture according to any of Claims 1 to 3, **characterized in that** the total amount of filler is 10 to 300 phr.

5. Use of a rubber mixture according to any of Claims 1 to 4 in hoses.

## Revendications

1. Composition de caoutchouc, **caractérisée en ce qu'**elle est constituée des composants suivants :
- au moins un caoutchouc
et
- au moins une charge choisie dans le groupe constitué par le noir de carbone, le graphite, les nanotubes de carbone (CNT), la silice, les silicates de calcium et d'aluminium, la terre de diatomée, le kaolin, le calcaire, le feldspath et/ou le talc, la craie, le gel d'alumine, les fibres (fibres courtes et fibres longues, fibres de verre, de carbone, d'aramide), les trichites (oxyde d'aluminium, carbure de silicium), le mica, la magnétite, les charges à noyau/enveloppe, le bitume, la poussière de caoutchouc dur, les billes de verre, la sciure de bois, la poudre de coquille de noix, qui peuvent être utilisé(e)s seul(e)s ou en association, la quantité totale de charge ne comprenant pas les éventuels résidus du support du sel de DBU.
et
- un système de promoteur d'adhérence qui est constitué d'au moins un sel de 1,8-diaza-bicyclo[5.4.0]undéc-7-ène (sel de DBU), le sel de DBU ayant été obtenu à partir de DBU et d'un acide monocarboxylique et/ou d'un acide dibasique et le sel de DBU ayant été appliqué sur un support, le support consistant en silice et
- un système de réticulation contenant au moins un soufre et/ou au moins un donneur de soufre ou un système de réticulation contenant au moins un peroxyde et
- 0 à 300 phr d'autres additifs, choisis dans le groupe constitué par l'oxyde de zinc, le stéarate de zinc, le stéarate de Mg, l'acide stéarique, et les plastifiants, comme par exemple les huiles blanches, esters, factices et cires, et les émulsifiants et les dispersants et les neutralisants et les agents anti-vieillissement et les pigments organiques et les pigments inorganiques et les antiozonants et les retardateurs de flamme et les additifs antibactériens, les agents de neutralisation des odeurs, les arômes, et les agents de glissement et de démoulage et les agents de protection contre la pourriture
et
la quantité totale du système de promoteur d'adhérence valant chaque fois de 0,005 à 50 % en masse pour 100 g de composition de caoutchouc.

2. Composition de caoutchouc selon la revendication 1, **caractérisée en ce que** le caoutchouc est choisi dans le groupe constitué par le copolymère éthylène-propylène (EPM) et le copolymère éthylène-propylène-diène (EPDM) et le caoutchouc nitrile (NBR) et le caoutchouc nitrile (partiellement) hydrogéné (HNBR) et l'alliage de polymères à base de caoutchouc nitrile avec du poly(chlorure de vinyle) (NBR/PVC) et le caoutchouc fluoré (FKM) et le caoutchouc chloroprène (CR) et le caoutchouc naturel (NR, IR) et le caoutchouc styrène-butadiène (SBR) et le caoutchouc styrène-butadiène polymérisé en solution (SSBR) et le caoutchouc styrène-butadiène polymérisé en émulsion (ESBR) et le caoutchouc isoprène (IR) et le caoutchouc butyle (HR) et le caoutchouc bromobutyle (BIIR) et le caoutchouc chlorobutyle (CIIR) et le caoutchouc butadiène (BR) et le polyéthylène chloré (CM) et le polyéthylène chlorosulfoné (CSM) et le caoutchouc épichlorhydrine (ECO, CO, ETER) et le caoutchouc éthylène-acétate de vinyle (EVA) et le caoutchouc silicone (MQ, VMQ, PVMQ, FVMQ) et le caoutchouc méthylsilicone fluoré (MFQ) et le caoutchouc fluoré (FKM) et le caoutchouc propylène perfluoré (FFPM) et le caoutchouc perfluorocarbone (FFKM) et le polyuréthane (PU) et le caoutchouc polynorbornène (PNR) et le caoutchouc trans-polyocténamère (TOR) et le caoutchouc polyester-uréthane (AU) et le caoutchouc polyuréthane (EU).

3. Composition de caoutchouc selon la revendication 1 ou 2, **caractérisée en ce que** la charge est la silice et/ou le noir de carbone.

4. Composition de caoutchouc selon l'une quelconque des revendications 1 à 3, **caractérisé en ce que** la quantité totale de charge vaut de 10 à 300 phr.

5. Utilisation d'une composition de caoutchouc selon l'une quelconque des revendications 1 à 4 dans des tuyaux souples.
